(19)

Europäisches
Patentamt
European
Patent Office
Office européen
des brevets

(11) **EP 4 079 707 A1**

(12) **EUROPEAN PATENT APPLICATION**
published in accordance with Art. 153(4) EPC

(43) Date of publication:
**26.10.2022  Bulletin 2022/43**

(21) Application number: **19956961.7**

(22) Date of filing: **16.12.2019**

(51) International Patent Classification (IPC):
***C04B 35/5831*** (2006.01)      ***C04B 35/5835*** (2006.01)

(52) Cooperative Patent Classification (CPC):
(C-Sets available)
**C04B 37/026; C04B 35/5831; C04B 35/6262;
C04B 35/62675; C04B 35/6268; C04B 35/62685;
C04B 35/6303; C04B 35/645; C22C 1/051;
C22C 26/00;** B22F 3/14; B22F 7/062;
B22F 2005/001; B22F 2999/00; C04B 2235/3852;

(Cont.)

(86) International application number:
**PCT/JP2019/049194**

(87) International publication number:
**WO 2021/124402 (24.06.2021 Gazette 2021/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Sumitomo Electric Hardmetal Corp.**
**Itami-shi, Hyogo 664-0016 (JP)**
• **SUMITOMO ELECTRIC INDUSTRIES, LTD.**
**Osaka-shi, Osaka 541-0041 (JP)**

(72) Inventors:
• **MOROGUCHI, Hironari**
**Itami-shi, Hyogo 664-0016 (JP)**

• **MATSUKAWA, Michiko**
**Itami-shi, Hyogo 664-0016 (JP)**
• **KUKINO, Satoru**
**Itami-shi, Hyogo 664-0016 (JP)**
• **ISHII, Akito**
**Osaka-shi, Osaka 541-0041 (JP)**
• **OKAMURA, Katsumi**
**Osaka-shi, Osaka 541-0041 (JP)**
• **ABE, Machiko**
**Itami-shi, Hyogo 664-0016 (JP)**
• **SANO, Kenta**
**Itami-shi, Hyogo 664-0016 (JP)**

(74) Representative: **Boult Wade Tennant LLP**
**Salisbury Square House**
**8 Salisbury Square**
**London EC4Y 8AP (GB)**

(54) **CUBIC BORON NITRIDE SINTERED COMPACT**

(57)    The presently disclosed cubic boron nitride sintered material comprises 30% by volume or more and 80% by volume or less of cubic boron nitride grains and 20% by volume or more and 70% by volume or less of a binder phase, the binder phase including: - at least one selected from the group consisting of: a simple substance selected from the group consisting of a group 4 element, a group 5 element and a group 6 element of the periodic table, aluminum, silicon, cobalt and nickel; an alloy thereof; and an intermetallic compound thereof; - at least one selected from the group consisting of: a compound consisting of at least one element selected from the group consisting of a group 4 element, a group 5 element and a group 6 element of the periodic table, aluminum, silicon, cobalt and nickel, and at least one element selected from the group consisting of nitrogen, carbon, boron and oxygen; and a solid solution derived from the compound; or - at least one selected from the group consisting of a simple substance selected from the group consisting of a group 4 element, a group 5 element and a group 6 element of the periodic table, aluminum, silicon, cobalt and nickel, an alloy thereof, and an intermetallic compound thereof; and at least one selected from the group consisting of a compound consisting of at least one element selected from the group consisting of a group 4 element, a group 5 element and a group 6 element of the

EP 4 079 707 A1

periodic table, aluminum, silicon, cobalt and nickel and at least one element selected from the group consisting of nitrogen, carbon, boron and oxygen, and a solid solution derived from the compound, the cubic boron nitride grains having a dislocation density of $1 \times 10^{15}/m^2$ or more and $1 \times 10^{17}/m^2$ or less.

(52) Cooperative Patent Classification (CPC): (Cont.)
C04B 2235/3856; C04B 2235/386;
C04B 2235/3886; C04B 2235/402;
C04B 2235/404; C04B 2235/405;
C04B 2235/428; C04B 2235/5436;
C04B 2235/5445; C04B 2235/604;
C04B 2235/72; C04B 2235/80; C04B 2237/123;
C04B 2237/361; C04B 2237/401;
C22C 2026/003; C22C 2026/008

C-Sets
B22F 2999/00, B22F 7/062, C22C 29/08,
C22C 26/00

**Description**

TECHNICAL FIELD

The present disclosure relates to a cubic boron nitride sintered material.

BACKGROUND ART

A cubic boron nitride sintered material (Hereinafter also referred to as a "cBN sintered material") is known as a high hardness material used in a cutting tool or the like. The cBN sintered material is typically composed of cubic boron nitride grains (hereinafter also referred to as "cBN grains") and a binder phase, and its characteristics tend to vary depending on the content of the cBN grains.

Accordingly, in the field of cutting, the type of cBN sintered material to be applied to a cutting tool is selected depending on the material of a workpiece, the required processing accuracy, and the like. For example, a cBN sintered material having a low content of cubic boron nitride (hereinafter also referred to as "cBN") can be suitably used for cutting of hardened steel or the like.

Japanese Patent Laid-Open No. 2000-044350 (PTL 1) discloses, as a tool made of a cBN sintered material optimized in crater resistance and strength and excellent in fracture resistance, a cutting tool comprising a cBN sintered material including 45 to 70% by volume of cBN grains and having the cBN grains sintered with a binder phase.

CITATION LIST

PATENT LITERATURE

PTL 1: Japanese Patent Laying-open No. 2000-044350

SUMMARY OF INVENTION

The presently disclosed cubic boron nitride sintered material comprises 30% by volume or more and 80% by volume or less of cubic boron nitride grains and 20% by volume or more and 70% by volume or less of a binder phase,

the binder phase including:

- at least one selected from the group consisting of: a simple substance selected from the group consisting of a group 4 element, a group 5 element and a group 6 element of the periodic table, aluminum, silicon, cobalt and nickel; an alloy thereof; and an intermetallic compound thereof;
- at least one selected from the group consisting of: a compound consisting of at least one element selected from the group consisting of a group 4 element, a group 5 element and a group 6 element of the periodic table, aluminum, silicon, cobalt and nickel, and at least one element selected from the group consisting of nitrogen, carbon, boron and oxygen; and a solid solution derived from the compound; or
- at least one selected from the group consisting of a simple substance selected from the group consisting of a group 4 element, a group 5 element and a group 6 element of the periodic table, aluminum, silicon, cobalt and nickel, an alloy thereof, and an intermetallic compound thereof; and at least one selected from the group consisting of a compound consisting of at least one element selected from the group consisting of a group 4 element, a group 5 element and a group 6 element of the periodic table, aluminum, silicon, cobalt and nickel and at least one element selected from the group consisting of nitrogen, carbon, boron and oxygen, and a solid solution derived from the compound,

the cubic boron nitride grains having a dislocation density of $1 \times 10^{15}/m^2$ or more and $1 \times 10^{17}/m^2$ or less.

DETAILED DESCRIPTION

[Problems to be Solved by the Present Disclosure]

In recent years, in view of cost reduction, there is an increasing demand for high-speed processing of hardened steel. Accordingly, there is a need for a cubic boron nitride sintered material also allowing a tool to have a long life even when the tool is used in high-speed processing of hardened steel.

Accordingly, an object of the present invention is to provide a cubic boron nitride sintered material that, when used as a material for a tool, allows the tool to have a long life even when it is used for high-speed processing of hardened steel.

[Advantageous Effect of the Present Disclosure]

When the presently disclosed cubic boron nitride sintered material is used as a material for a tool, the cubic boron nitride sintered material allows the tool to have a long life even when it is used for high-speed processing of hardened steel.

[Overview of Embodiments of the Present Disclosure]

Initially, embodiments of the present disclosure will be listed and specifically described.

(1) The presently disclosed cubic boron nitride sintered material comprises 30% by volume or more and 80% by volume or less of cubic boron nitride grains and 20% by volume or more and 70% by volume or less of a binder phase,

the binder phase including

- at least one selected from the group consisting of: a simple substance selected from the group consisting of a group 4 element, a group 5 element and a group 6 element of the periodic table, aluminum, silicon, cobalt and nickel; an alloy thereof; and an intermetallic compound thereof;
- at least one selected from the group consisting of: a compound consisting of at least one element selected from the group consisting of a group 4 element, a group 5 element and a group 6 element of the periodic table, aluminum, silicon, cobalt and nickel, and at least one element selected from the group consisting of nitrogen, carbon, boron and oxygen; and a solid solution derived from the compound; or
- at least one selected from the group consisting of a simple substance selected from the group consisting of a group 4 element, a group 5 element and a group 6 element of the periodic table, aluminum, silicon, cobalt and nickel, an alloy thereof, and an intermetallic compound thereof; and at least one selected from the group consisting of a compound consisting of at least one element selected from the group consisting of a group 4 element, a group 5 element and a group 6 element of the periodic table, aluminum, silicon, cobalt and nickel and at least one element selected from the group consisting of nitrogen, carbon, boron and oxygen, and a solid solution derived from the compound,

the cubic boron nitride grains having a dislocation density of $1 \times 10^{15}/m^2$ or more and $1 \times 10^{17}/m^2$ or less.

When the presently disclosed cubic boron nitride sintered material is used as a material for a tool, the cubic boron nitride sintered material allows the tool to have a long life even when it is used for high-speed processing of hardened steel.

(2) The cubic boron nitride grains preferably have a dislocation density of $1 \times 10^{15}/m^2$ or more and $5 \times 10^{16}/m^2$ or less. This provides a further increased tool life.
(3) The cubic boron nitride grains preferably include 0.02% by mass or more and 0.2% by mass or less of calcium. This provides a further increased tool life.
(4) The cubic boron nitride grains preferably include 0.02% by mass or more and 0.17% by mass or less of calcium. This provides a further increased tool life.
(5) The cubic boron nitride grains preferably include 0.02% by mass or more and 0.15% by mass or less of calcium. This provides a further increased tool life.
(6) The cubic boron nitride sintered material preferably comprises 40% by volume or more and 75% by volume or less of the cubic boron nitride grains. This provides a further increased tool life.

[Detailed Description of Embodiments]

Initially the present inventors have observed why a tool using a conventional cubic boron nitride sintered material has a reduced tool life when it is used in high speed processing of hardened steel. As a result, the present inventors have found that the cubic boron nitride sintered material has insufficient thermal conductivity, and when the tool is used for high speed processing of hardened steel, in particular, the temperature of and in a vicinity of a point of the tool in contact with the workpiece increases, which easily causes crater wear resulting in a reduced tool life.
The present inventors have conducted more detailed studies on factors affecting the thermal conductivity of the cubic boron nitride sintered material. As a result, the present inventors have found that cubic boron nitride grains' dislocation density affects the thermal conductivity of the cubic boron nitride sintered material. Cubic boron nitride includes significantly many dislocations, and those skilled in the art have conventionally not paid attention to a relationship between cubic boron nitride grains' dislocation density and tool life.

As a result of intensive studies based on the above findings, the present inventors have completed the presently disclosed cubic boron nitride sintered material.

Hereinafter, a specific example of the presently disclosed cubic boron nitride sintered material will be described. In the present specification, an expression in the form of "A-B" means a range's upper and lower limits (that is, A or more and B or less), and when A is not accompanied by any unit and B is alone accompanied by a unit, A has the same unit as B.

In the present specification, when a compound or the like is represented by a chemical formula without specifying any specific atomic ratio, it shall include any conventionally known atomic ratio and should not necessarily be limited to what falls within a stoichiometric range. For example, for "TiN," the ratio of the number of atoms constituting TiN includes any conventionally known atomic ratio.

«Cubic boron nitride sintered material»

A cubic boron nitride sintered material according to one embodiment of the present disclosure is a cubic boron nitride sintered material comprising 30% by volume or more and 80% by volume or less of cubic boron nitride grains and 20% by volume or more and 70% by volume or less of a binder phase,

the binder phase including:

- at least one selected from the group consisting of: a simple substance selected from the group consisting of a group 4 element, a group 5 element and a group 6 element of the periodic table, aluminum, silicon, cobalt and nickel; an alloy thereof; and an intermetallic compound thereof;
- at least one selected from the group consisting of: a compound consisting of at least one element selected from the group consisting of a group 4 element, a group 5 element and a group 6 element of the periodic table, aluminum, silicon, cobalt and nickel, and at least one element selected from the group consisting of nitrogen, carbon, boron and oxygen; and a solid solution derived from the compound; or
- at least one selected from the group consisting of a simple substance selected from the group consisting of a group 4 element, a group 5 element and a group 6 element of the periodic table, aluminum, silicon, cobalt and nickel, an alloy thereof, and an intermetallic compound thereof; and at least one selected from the group consisting of a compound consisting of at least one element selected from the group consisting of a group 4 element, a group 5 element and a group 6 element of the periodic table, aluminum, silicon, cobalt and nickel and at least one element selected from the group consisting of nitrogen, carbon, boron and oxygen, and a solid solution derived from the compound,

the cubic boron nitride grains having a dislocation density of $1 \times 10^{15}/m^2$ or more and $1 \times 10^{17}/m^2$ or less.

When the presently disclosed cubic boron nitride sintered material is used as a material for a tool, the cubic boron nitride sintered material allows the tool to have a long life even when it is used for high-speed processing of hardened steel, in particular. A reason for this is inferred as indicated by items (i) to (iii) below:

(i) The presently disclosed cubic boron nitride sintered material comprises 30% by volume or more and 80% by volume or less of cBN grains high in hardness, strength and toughness. For this reason, it is inferred that the cubic boron nitride sintered material has excellent wear resistance and excellent fracture resistance, and hence allows an extended tool life.

(ii) In the presently disclosed cubic boron nitride sintered material, the binder phase includes:

- at least one selected from the group consisting of: a simple substance selected from the group consisting of a group 4 element, a group 5 element and a group 6 element of the periodic table, aluminum, silicon, cobalt and nickel; an alloy thereof; and an intermetallic compound thereof;
- at least one selected from the group consisting of: a compound consisting of at least one element selected from the group consisting of a group 4 element, a group 5 element and a group 6 element of the periodic table, aluminum, silicon, cobalt and nickel, and at least one element selected from the group consisting of nitrogen, carbon, boron and oxygen; and a solid solution derived from the compound; or
- at least one selected from the group consisting of a simple substance selected from the group consisting of a group 4 element, a group 5 element and a group 6 element of the periodic table, aluminum, silicon, cobalt and nickel, an alloy thereof, and an intermetallic compound thereof; and at least one selected from the group consisting of a compound consisting of at least one element selected from the group consisting of a group 4 element, a group 5 element and a group 6 element of the periodic table, aluminum, silicon, cobalt and nickel and at least one element selected from the group consisting of nitrogen, carbon, boron and oxygen, and a solid solution derived from the compound.

The binder phase has a large force to bind to cBN grains. For this reason, it is inferred that the cubic boron nitride sintered material has excellent fracture resistance and hence allows an extended tool life.

(iii) The presently disclosed cubic boron nitride sintered material comprises cubic boron nitride grains having a dislocation density of $1 \times 10^{15}/m^2$ or more and $1 \times 10^{17}/m^2$ or less. The cubic boron nitride grains are enhanced in thermal conductivity. Accordingly, the cubic boron nitride sintered material including the cubic boron nitride grains is also enhanced in thermal conductivity. Therefore, even when a tool using the cubic boron nitride sintered material is used for high speed processing of hardened steel, the temperature of and in a vicinity of a point of the tool in contact with the workpiece is not easily increased, which suppresses crater wear and it is thus inferred that an extended tool life is provided.

While the above describes that the tool using the presently disclosed cubic boron nitride sintered material has a long tool life in high speed processing of hardened steel, the workpiece is not limited thereto. Examples of the workpiece include carburized and quenched steel (SCM415H, SCr420H), induction-hardened steel (S45C), and bearing steel (SUJ2).

(Composition of cubic boron nitride sintered material)

The presently disclosed cubic boron nitride sintered material comprises 30% by volume or more and 80% by volume or less of cubic boron nitride grains and 20% by volume or more and 70% by volume or less of a binder phase. Note that the cBN sintered material may include inevitable impurities resulting from raw materials, manufacturing conditions, and the like.

The cBN sintered material preferably contains cBN grains at a ratio with a lower limit of 30% by volume, preferably 35% by volume, more preferably 40% by volume. The cBN sintered material contains cBN grains at the ratio with an upper limit of 80% by volume, preferably 77% by volume, more preferably 75% by volume. The cBN sintered material contains cBN grains at a ratio of 30% by volume or more and 80% by volume or less, preferably 35% by volume or more and 77% by volume or less, more preferably 40% by volume or more and 75% by volume or less.

The cBN sintered material contains a binder phase at a ratio with a lower limit of 20% by volume, preferably 23% by volume, more preferably 25% by volume. The cBN sintered material contains the binder phase at the ratio with an upper limit of 70% by volume, preferably 65% by volume, more preferably 60% by volume. The cBN sintered material contains the binder phase at a ratio of 20% by volume or more and 70% by volume or less, preferably 23% by volume or more and 65% by volume or less, more preferably 25% by volume or more and 60% by volume or less.

The cBN sintered material's cBN grain content ratio (vol%) and binder phase content ratio (vol%) can be confirmed by subjecting the cBN sintered material to structural observation, elemental analysis, and the like by using an energy dispersive X-ray analyzer (EDX) (Octan Elect EDS system) accompanying a scanning electron microscope (SEM) ("JSM-7800F" (trade name) manufactured by JEOL Ltd.) (hereinafter also referred to as an "SEM-EDX"). The content ratios are specifically measured in the following method.

Initially, the cBN sintered material is cut at a desired part to prepare a sample including a cross section of the cBN sintered material. The cross section can be prepared using a focused ion beam device, a cross section polisher, or the like. Subsequently, the cross section is observed with an SEM with a magnification of 5,000 times to obtain a backscattered electron image. In the backscattered electron image, a region where cBN grains are present will be a black region and a region where the binder phase is present will be a gray region or a white region.

Subsequently, the backscattered electron image is binarized using image analysis software ("WinROOF" by Mitani Corporation). From the binarized image, an area ratio of pixels that are attributed to a dark field (i.e., pixels attributed to cBN grains) in the area of the field of view for measurement is calculated. The calculated area ratio can be regarded as a value in % by volume, and a cBN grain content ratio (vol %) can thus be obtained.

From the binarized image, an area ratio of pixels that are attributed to a bright field (i.e., pixels attributed to the binder phase) in the area of the field of view for measurement can be calculated to obtain a binder phase content ratio (vol%) .

As measured by the applicant, it has been confirmed that, for measurement of the cBN sintered material's cBN grain content ratio (vol%) and binder phase content ratio (vol%) in the same sample, while a location where a field of view for measurement is selected is changed and calculation is thus performed for a plurality of times, measurement results are obtained without substantial variation and thus there is no arbitrariness even with a field of view set, as desired, for measurement.

The fact that the pixels attributed to the dark field are attributed to cBN grains can be confirmed by subjecting the cBN sintered material to elemental analysis with SEM-EDX.

(Inevitable Impurities)

The presently disclosed cubic boron nitride sintered material may include inevitable impurities within a range showing the effect of the present disclosure. Examples of the inevitable impurities include hydrogen, oxygen, carbon, alkali metal elements (lithium (Li), sodium (Na), potassium (K), and the like), alkaline earth metal elements (calcium (Ca), magnesium (Mg), and the like), and other similar metal elements. When the cubic boron nitride sintered material includes inevitable impurities, the inevitable impurities are preferably contained in an amount of 0.1% by mass or less. The content of the inevitable impurities can be measured through secondary ion mass spectrometry (SIMS).

<<Cubic boron nitride grains>>

(Dislocation Density)

The presently disclosed cubic boron nitride sintered material comprises cubic boron nitride grains having a dislocation density of $1 \times 10^{15}/m^2$ or more and $1 \times 10^{17}/m^2$ or less. The present cubic boron nitride grains are higher in thermal conductivity than conventional cubic boron nitride grains. Accordingly, the cubic boron nitride sintered material including the cubic boron nitride grains is also enhanced in thermal conductivity. Therefore, even when a tool using the cubic boron nitride sintered material is used for high speed processing of hardened steel, the temperature of and in a vicinity of a point of the tool in contact with the workpiece is not easily increased, which suppresses crater wear and it is thus inferred that an extended tool life is provided. Furthermore, the cubic boron nitride grains having a dislocation density of $1 \times 10^{15}/m^2$ or more can have excellent strength and allows a tool to have a long life.

The cubic boron nitride grains have a dislocation density with an upper limit of $1 \times 10^{17}/m^2$, preferably $5 \times 10^{16}/m^2$, more preferably $1 \times 10^{16}/m^2$. While the dislocation density's lower limit is not particularly limited, it is $1 \times 10^{15}/m^2$ from the viewpoint of manufacture. That is, the dislocation density is preferably $1 \times 10^{15}/m^2$ or more and $1 \times 10^{17}/m^2$ or less, more preferably $1 \times 10^{15}/m^2$ or more and $5 \times 10^{16}/m^2$ or less, still more preferably $1 \times 10^{15}/m^2$ or more and $1 \times 10^{16}/m^2$ or less.

As described herein, the cubic boron nitride grains' dislocation density is measured in a large-scale synchrotron radiation facility (e.g., SPring-8 (located in Hyogo Prefecture)). Specifically, it is measured in the following method.

Initially, a sample of the cubic boron nitride sintered material is introduced into a container and sealed therein, and in the container the sample is immersed in fluoronitric acid (hydrofluoric acid:nitric acid = 5:5, which is a ratio in volume) for 48 hours. As a result, the binder phase completely dissolves in the fluoronitric acid, and the cBN grains remain alone. The cBN grains are introduced into a 0.3 mmφ capillary manufactured by TOHO for X-ray crystallography ("Mark Tube" (trademark) manufactured by TOHO) and thus prepared as a sealed-off specimen.

The specimen was subjected to X-ray diffraction measurement under the following conditions, and a line profile of a diffraction peak from each orientation plane of cubic boron nitride's major orientations which are (111), (200), (220), (311), (400) and (531) is obtained.

(Conditions for X-ray diffraction measurement)

X-ray source: synchrotron radiation
Condition for equipment: detector MYTHEN
Energy: 18 keV (wavelength: 0.6888 angstrom)
Camera length: 573 mm

Measurement peak: six peaks from cubic boron nitride's (111), (200), (220), (311), (400), and (531). When it is difficult to obtain a profile depending on texture and orientation, the peak for that Miller index is excluded.

Measuring condition: there are 9 or more measurement points set in the full width at half maximum corresponding to each measurement peak. Peak top intensity is set to 2000 counts or more. Peak tail is also used in the analysis, and accordingly, the measurement range is set to about 10 times the full width at half maximum.

A line profile obtained from the above X-ray diffraction measurement will be a profile including both a true broadening attributed to a physical quantity such as the sample's inhomogeneous strain and a broadening attributed to the equipment. In order to determine inhomogeneous strain and crystallite size, a component attributed to the equipment is removed from the measured line profile to obtain a true line profile. The true line profile is obtained by fitting the obtained line profile and the line profile that is attributed to the equipment by a pseudo Voigt function, and subtracting the line profile attributed to the equipment. $LaB_6$ was used as a standard sample for removing a broadening of a diffracted wave attributed to the equipment. When significantly collimated radiation is used, a broadening of a diffracted wave attributed to the equipment may be regarded as zero.

The obtained true line profile is analyzed using the modified Williamson-Hall method and the modified Warren-Averbach method to calculate dislocation density. The modified Williamson-Hall method and the modified Warren-Averbach method are known line profile analysis methods used for determining dislocation density.

The modified Williamson-Hall method's expression is represented by the following expression (I):

$$\Delta K = \frac{0.9}{D} + \left( \frac{\pi M^2 b^2}{2} \right)^{1/2} \rho^{1/2} K C^{1/2} + O(K^2 C) \qquad \dots \text{(I)}$$

where $\Delta K$ represents a half width of a line profile, D represents a crystallite size, M represents an arrangement parameter, b represents a Burgers vector, $\rho$ represents dislocation density, K represents a scattering vector, $O(K^2C)$ represents a higher-order term of $K^2C$, and C represents an average contrast factor.

C in the above expression (I) is represented by the following expression (II):

$$C = C_{h00} [1 - q(h^2k^2 + h^2l^2 + k^2l^2)/(h^2 + k^2 + l^2)^2] \dots \quad \text{(II)}.$$

In the above expression (II), a contrast factor $C_{h00}$ for screw dislocation and that for edge dislocation and a coefficient q for each contrast factor are obtained by using the computing code ANIZC, with a slip system of $<110> \{111\}$, and elastic stiffness $C_{11}$, $C_{12}$ and $C_{44}$ of 8.44 GPa, 1.9 GPa, and 4.83 GPa, respectively. Contrast factor $C_{h00}$ is 0.203 for screw dislocation and 0.212 for edge dislocation. The coefficient q for the contrast factor is 1.65 for screw dislocation and 0.58 for edge dislocation. Note that screw dislocation's ratio is fixed to 0.5 and edge dislocation's ratio is fixed to 0.5.

Furthermore, between dislocation and inhomogeneous strain, a relationship represented by an expression (III) is established using contrast factor C, as below:

$$<\varepsilon(L)^2> = (\rho C b^2/4\pi)\ln(R_e/L) \quad \dots \quad \text{(III)},$$

where $R_e$ represents dislocation's effective radius.

By the relationship of the above expression (III) and the Warren-Averbach expression, the following expression (IV) can be presented, and as the modified Warren-Averbach method, dislocation density $\rho$ and a crystallite size can be determined.

In

$$A(L) = \ln A^S(L) - (\pi L^2 \rho b^2/2)\ln(R_e/L)(K^2C) + O(K^2C)^2 \qquad \text{(IV)},$$

where A(L) represents a Fourier series, $A^S(L)$ represents a Fourier series for a crystallite size, and L represents a Fourier length.

For details of the modified Williamson-Hall method and the modified Warren-Averbach method, see T. Ungar and A. Borbely, "The effect of dislocation contrast on x-ray line broadening: A new approach to line profile analysis," Appl. Phys. Lett., vol.69, no.21, p.3173, 1996, and T. Ungar, S. Ott, P. Sanders, A. Borbely, J. Weertman, "Dislocations, grain size and planar faults in nanostructured copper determined by high resolution X-ray diffraction and a new procedure of peak profile analysis," Acta Mater., vol.46, no.10, pp.3693-3699, 1998.

As measured by the applicant, it has been confirmed that, for measurement of the cBN grains' dislocation density in the same sample, while a location where a measurement range is selected is changed and calculation is thus performed for a plurality of times, measurement results are obtained without substantial variation and there is no arbitrariness even with a field of view set, as desired, for measurement.

(Calcium Content)

The cubic boron nitride grains included in the presently disclosed cubic boron nitride sintered material preferably include 0.2% by mass or less of calcium. When the cBN grains include calcium, the cBN grains have reduced atomic vacancies and hence per se have increased strength and toughness at room temperature and high temperature, and a tool using the cubic boron nitride sintered material has a further extended tool life.

The cubic boron nitride grains have a calcium content with an upper limit preferably of 0.2% by mass, more preferably 0.17% by mass, still more preferably 0.15% by mass. While the cubic boron nitride grains have the calcium content without any particular lower limit, it is preferably 0.02% by mass from a viewpoint of production. The cubic boron nitride grains have a calcium content preferably of 0.02% by mass or more and 0.2% by mass or less, more preferably 0.02% by mass or more and 0.17% by mass or less, still more preferably 0.02% by mass or more and 0.15% by mass or less.

The calcium content of the cubic boron nitride grains is measured in the following method:
A sample of the cubic boron nitride sintered material is introduced into a container and sealed therein, and in the container the sample is immersed in fluoronitric acid (hydrofluoric acid: nitric acid = 5:5, which is a ratio in volume) for 48 hours. As a result, the binder phase completely dissolves in the fluoronitric acid, and the cBN grains remain alone. The cBN grains are subjected to high-frequency inductively coupled plasma-atomic emission spectroscopy (ICP) (with a measurement apparatus: ThermoFisher iCAP6500) to quantitatively measure the calcium content of the cBN grains.

(Median Diameter d50)

A median diameter d50 in equivalent circular diameter of the cubic boron nitride grains included in the cubic boron nitride sintered material of the present disclosure (hereinafter also simply referred to as "median diameter d50") is preferably 1 nm or more and 10,000 nm or less, more preferably 10 nm or more and 8,000 nm or less. This allows a tool using the cubic boron nitride sintered material to have a long tool life.

In the present specification, a median diameter d50 in equivalent circular diameter of cubic boron nitride grains is determined as follows: at each of selected five measurement points as desired, a median diameter d50 of a plurality of cubic boron nitride grains is measured and an average of such median diameters d50 obtained at the five measurement points is calculated to obtain the median diameter d50 in equivalent circular diameter of the cubic boron nitride grains. A specific measurement method is as follows.

When the cubic boron nitride sintered material is used as a part of a tool, the portion of the cubic boron nitride sintered material is cut out by a diamond grindstone electrodeposition wire or the like, the cross section cut out is polished, and five measurement points are set on the polished surface as desired.

The polished surface is observed at each measurement point with a SEM ("JSM-7500F" (trade name) manufactured by JEOL Ltd.) to obtain a SEM image. The measurement is done in a field of view having a size of 12 $\mu$m $\times$ 15 $\mu$m, and the observation is done at a magnification of 10,000 times.

The distribution in equivalent circular diameter of cubic boron nitride grains is calculated for each of the five SEM images using image processing software (Win Roof ver. 7.4.5) in a state where the cubic boron nitride grains observed within a field of view for measurement are separated from each other at a grain boundary.

From the distribution in equivalent circular diameter of cubic boron nitride grains, a median diameter d50 for each measurement point is calculated, and an average of the median diameters d50 obtained at the measurement points is calculated. The average value corresponds to the median diameter d50 in equivalent circular diameter of the cubic boron nitride grains.

Note that, as measured by the applicant, it has been confirmed that, for measurement of median diameter d50 of cubic boron nitride grains in the same sample, while a location in the cubic boron nitride sintered material where a field of view for measurement is selected is changed and calculation is thus performed for a plurality of times, measurement results are obtained without substantial variation and there is no arbitrariness even with a field of view set, as desired, for measurement.

«Binder phase»

The binder phase plays a role in making cBN particles, which are a difficult-to-sinter material, sinterable at industrial-level pressure and temperature. The binder phase has a lower reactivity with iron than cBN, and thus additionally acts to suppress chemical wear and thermal wear in cutting of high hardness hardened steel. In addition, when a cBN sintered material contains the binder phase, it enhances wear resistance in high-efficiency processing of high hardness hardened steel.

The presently disclosed cBN sintered material comprises a binder phase that includes:

- at least one selected from the group consisting of a simple substance selected from the group consisting of a group 4 element, a group 5 element and a group 6 element of the periodic table, aluminum, silicon, cobalt and nickel (hereinafter also referred to as "the group A"), an alloy thereof, and an intermetallic compound thereof;
- at least one selected from the group consisting of: a compound consisting of at least one element selected from the group consisting of a group 4 element, a group 5 element and a group 6 element of the periodic table, aluminum, silicon, cobalt and nickel (or the group A) and at least one element selected from the group consisting of nitrogen, carbon, boron and oxygen (hereinafter also referred to as "the group B"); and a solid solution derived from the compound; or
- at least one selected from the group consisting of a simple substance selected from the group consisting of a group 4 element, a group 5 element and a group 6 element of the periodic table, aluminum, silicon, cobalt and nickel (or the group A), an alloy thereof, and an intermetallic compound thereof; and at least one selected from the group consisting of a compound consisting of at least one element selected from the group consisting of a group 4 element, a group 5 element and a group 6 element of the periodic table, aluminum, silicon, cobalt and nickel (or the group A) and at least one element selected from the group consisting of nitrogen, carbon, boron and oxygen (or the group B), and a solid solution derived from the compound. That is, the binder phase can be in any of the following forms (a) to (f):

(a) The binder phase consists of at least one of a simple substance, an alloy, and an intermetallic compound of the group A.
(b) The binder phase includes at least one of a simple substance, an alloy, and an intermetallic compound of the group A.
(c) The binder phase consists of at least one selected from the group consisting of a compound consisting of at least one element selected from the group A and at least one element selected from the group B, and a solid solution derived from the compound.
(d) The binder phase includes at least one selected from the group consisting of a compound consisting of at least one element selected from the group A and at least one element selected from the group B, and a solid solution derived from the compound.
(e) The binder phase consists of at least one selected from the group consisting of at least one of a simple substance, an alloy, and an intermetallic compound of the group A, and a compound consisting of at least one element selected from the group A and at least one element selected from the group B and a solid solution derived from the compound.
(f) The binder phase includes at least one selected from the group consisting of at least one of a simple substance, an alloy, and an intermetallic compound of the group A, and a compound consisting of at least one element selected from the group A and at least one element selected from the group B and a solid solution derived from the compound.

The group 4 element of the periodic table includes titanium (Ti), zirconium (Zr) and hafnium (Hf) for example. The group 5 element of the periodic table includes vanadium (V), niobium (Nb) and tantalum (Ta) for example. The group 6 element of the periodic table includes chromium (Cr), molybdenum (Mo) and tungsten (W) for example. Hereinafter, an element included in the group 4 element, the group 5 element, and the group 6 element will also be referred to as a "first metal element."
Examples of the alloy of the first metal element include Ti-Zr, Ti-Hf, Ti-V, Ti-Nb, Ti-Ta, Ti-Cr, and Ti-Mo. Examples of the intermetallic compound of the first metal element include $TiCr_2$, $Ti_3Al$ and Co-Al.
Examples of the compound including the first metal element and nitrogen (i.e., a nitride) include titanium nitride (TiN), zirconium nitride (ZrN), hafnium nitride (HfN), vanadium nitride (VN), niobium nitride (NbN), tantalum nitride (TaN), chromium nitride ($Cr_2N$), molybdenum nitride (MoN), tungsten nitride (WN), aluminum nitride (AlN), silicon nitride ($Si_3N_4$), cobalt nitride (CoN), nickel nitride (NiN), titanium zirconium nitride (TiZrN), titanium hafnium nitride (TiHfN), titanium vanadium nitride (TiVN), titanium niobium nitride (TiNbN), titanium tantalum nitride (TiTaN), titanium chromium nitride (TiCrN), titanium molybdenum nitride (TiMoN), titanium tungsten nitride (TiWN), titanium aluminum nitride (TiAlN, $Ti_2AlN$, $Ti_3AlN$), zirconium hafnium nitride (ZrHfN), zirconium vanadium nitride (ZrVN), zirconium niobium nitride (ZrNbN), zirconium tantalum nitride (ZrTaN), zirconium chromium nitride (ZrCrN), zirconium molybdenum nitride (ZrMoN), zirconium tungsten nitride (ZrWN), hafnium vanadium nitride (HfVN), hafnium niobium nitride (HfNbN), hafnium tantalum nitride (HfTaN), hafnium chromium nitride (HfCrN), hafnium molybdenum nitride (HfMoN), hafnium tungsten nitride (HfWN), vanadium niobium nitride (VNbN), vanadium tantalum nitride (VTaN), vanadium chromium nitride (VCrN), vanadium molybdenum nitride (VMoN), vanadium tungsten nitride (VWN), niobium tantalum nitride (NbTaN), niobium chromium nitride (NbCrN), niobium molybdenum nitride (NbMoN), niobium tungsten nitride (NbWN), tantalum chromium nitride (TaCrN), tantalum molybdenum nitride (TaMoN), tantalum tungsten nitride (TaWN), chromium molybdenum nitride (CrMoN), chromium tungsten nitride (CrWN), and molybdenum chromium nitride (MoWN).

Examples of the compound including the first metal element and carbon (i.e., a carbide) include titanium carbide (TiC), zirconium carbide (ZrC), hafnium carbide (HfC), vanadium carbide (VC), niobium carbide (NbC), tantalum carbide (TaC), chromium carbide ($Cr_3C_2$), molybdenum carbide (MoC), tungsten carbide (WC), silicon carbide (SiC), and tungsten-cobalt carbide ($W_2Co_3C$).

Examples of the compound including the first metal element and boron (i.e., a boride) include titanium boride (TiB2), zirconium boride ($ZrB_2$), hafnium boride ($HfB_2$), vanadium boride ($VB_2$), niobium boride ($NbB_2$), tantalum boride ($TaB_2$), chromium boride (CrB), molybdenum boride (MoB), tungsten boride (WB), aluminum boride ($AlB_2$), cobalt boride ($Co_2B$), and nickel boride ($Ni_2B$).

Examples of the compound including the first metal element and oxygen (i.e., an oxide) include titanium oxide ($TiO_2$), zirconium oxide ($ZrO_2$), hafnium oxide ($HfO_2$), vanadium oxide ($V_2O_5$), niobium oxide ($Nb_2O_5$), tantalum oxide ($Ta_2O_5$), chromium oxide ($Cr_2O_3$), molybdenum oxide ($MoO_3$), tungsten oxide ($WO_3$), aluminum oxide ($Al_2O_3$), silicon oxide ($SiO_2$), cobalt oxide (CoO), and nickel oxide (NiO).

Examples of the compound including the first metal element, carbon and nitrogen (i.e., a carbonitride) include titanium carbonitride (TiCN), zirconium carbonitride (ZrCN), hafnium carbonitride (HfCN), titanium niobium carbonitride (TiNbCN), titanium zirconium carbonitride (TiZrCN), titanium hafnium carbonitride (TiHfCN), titanium tantalum carbonitride (TiTaCN), and titanium chromium carbonitride (TiCrCN).

Examples of the compound including the first metal element, oxygen, and nitrogen (i.e., an oxynitride) include titanium oxynitride (TiON), zirconium oxynitride (ZrON), hafnium oxynitride (HfON), vanadium oxynitride (VON), niobium oxynitride (NbON), tantalum oxynitride (TaON), chromium oxynitride (CrON), molybdenum oxynitride (MoON), tungsten oxynitride (WON), aluminum oxynitride (AlON), and silicon oxynitride (SiAlON).

The solid solution derived from the binder phase compound as above means a state in which two or more types of these compounds are dissolved in each other's crystal structure, and means an interstitial solid solution, a substitutional solid solution or the like.

The binder phase compound may be one type of compound or two or more types of compounds in combination.

A total content of the binder phase compound and the solid solution derived therefrom in the binder phase preferably has a lower limit of 50% by volume, more preferably 60% by volume, still more preferably 70% by volume. The total content of the binder phase compound and the solid solution derived therefrom in the binder phase preferably has an upper limit of 80% by volume, more preferably 90% by volume, most preferably 100% by volume. The total content of the binder phase compound and the solid solution derived therefrom in the binder phase is preferably 50% by volume or more and 80% by volume or less, more preferably 60% by volume or more and 90% by volume or less, still more preferably 70% by volume or more and 100% by volume or less.

The total content of the binder phase compound and the solid solution derived therefrom in the binder phase is measured in the RIR (Reference Intensity Ratio) method through XRD.

The binder phase may include a component other than the binder phase compound. Examples of an element constituting the other component can include manganese (Mn) and rhenium (Re).

The composition of the binder phase included in the cBN sintered material can be determined through XRD (X-ray diffraction).

<Applications>

The presently disclosed cubic boron nitride sintered material is suitably applied to cutting tools, wear resistant tools, grinding tools, and the like.

The cutting, wear resistant and grinding tools using the presently disclosed cubic boron nitride sintered material may entirely be composed of the cubic boron nitride sintered material or may only have a portion (e.g., a cutting edge for a cutting tool) composed of the cubic boron nitride sintered material. Furthermore, a coating film may be formed on a surface of each tool.

The cutting tool can include drills, end mills, indexable cutting inserts for drills, indexable cutting inserts for end mills, indexable cutting inserts for milling, indexable cutting inserts for turning, metal saws, gear cutting tools, reamers, taps, a cutting bite, and the like.

The wear resistant tool can include dies, scribers, scribing wheels, and dressers, and the like. The grinding tool can include grinding stone and the like.

«Method for manufacturing cubic boron nitride sintered material»

The presently disclosed cubic boron nitride sintered material can be manufactured for example in the following method:

Initially, cubic boron nitride powder (hereinafter also referred to as cBN powder) and raw material powder for a binder are prepared.

The cBN powder is a raw material powder for cBN grains included in the cBN sintered material. The cBN powder is not particularly limited, and can be a known cBN powder. Inter alia, the cBN powder is preferably obtained by holding hexagonal boron nitride powder in the presence of catalytic LiCaBN$_2$ in a range in which cubic boron nitride is thermodynamically stable, and thus converting the hexagonal boron nitride powder into cubic boron nitride powder.

The cBN powder's D$_{50}$ (or average grain size) is not particularly limited, and can for example be 0.1 to 12.0 μm.

The cBN powder is subjected to electron beam irradiation, microwave treatment, or heat treatment in an ammonia atmosphere or a pressurized nitrogen atmosphere for a long period of time. This reduces cBN's dislocation density.

When the cBN powder is subjected to electron beam irradiation, it is done preferably with irradiation energy of 25 MeV or more and 30 MeV or less for an irradiation time of 10 hours or more and 24 hours or less for example.

Raw material powder for a binder is raw material powder for the binder phase included in the cBN sintered material. The raw material powder for the binder can be prepared, for example, as follows: A compound including WC, Co, and Al is obtained by mixing 76% by weight of a nitride of Ti and 18% by weight of Al and heat-treating the mixture in a vacuum at 1200°C for 30 minutes. The compound is pulverized to prepare the raw material powder for the binder.

While each powder is agitated and pulverized in any method, agitation and pulverization using a medium such as a ball, jet mill agitation and pulverization, and the like are preferable from the viewpoint of efficient and homogeneous agitation. Each powder may be agitated and pulverized in a wet manner or a dry manner. In the raw material powder for the binder, peaks of TiN, Ti$_2$AlN, TiAl$_3$ and the like are observed through XRD.

The cBN powder and raw material powder for the binder prepared as described above are mixed together by wet ball mill-mixing using ethanol, acetone or the like as a solvent to prepare a powdery mixture. The solvent is removed by air-drying after the mixing. Subsequently, a heat treatment is performed to volatilize impurities such as moisture adsorbed on the surface of the powdery mixture and thus clean the surface of the powdery mixture.

The raw material powder for the binder can include at least one metal selected from Fe, Co, Ni, Al, Si, Cr, Ti, V, Zr, Nb, Mo, Hf, Ta and W, an alloy thereof, and a carbide, an oxide, a nitride, and a carbonitride thereof.

The above powdery mixture is brought into contact with a WC-6% Co cemented carbide disc and a Co (cobalt) foil and thus introduced into a container made of Ta (tantalum), and the container is vacuumed and sealed. The powdery mixture in the vacuumed and sealed container is sintered using a belt-type ultrahigh-pressure and ultrahigh-temperature generator at 3 to 9 GPa and 1100 to 1900°C for 5 to 30 minutes. The presently disclosed cubic boron nitride sintered material is thus manufactured.

While the powdery mixture is sintered, the cBN's internal dislocation density increases, which can also be suppressed by adjusting the sintering process. For example, increasing a rate applied to increase pressure and holding the powdery mixture at a sintering pressure and a sintering temperature for a long period of time can suppress increase in dislocation density to reduce cBN's dislocation density during sintering to be smaller than conventional.

While the above-described method suggests that cBN's dislocation density be reduced by synthesizing the cBN powder at high temperature or for a long period of time, exposing the cBN powder to an electron beam, subjecting the cBN powder to a microwave treatment or a heat treatment for a long period of time in an ammonia atmosphere or a pressurized nitrogen atmosphere, increasing a rate applied to increase pressure when the powdery mixture is sintered, and holding the powdery mixture at a sintering pressure and a sintering temperature for a long period of time, cBN's dislocation density may be reduced in a different method. For example, cBN's dislocation density can also be reduced by producing a sintered material without exposing the cBN powder to an electron beam or subjecting the cBN powder to a microwave treatment or a heat treatment for a long period of time in an ammonia atmosphere or a pressurized nitrogen atmosphere, and by exposing the sintered material to an electron beam or subjecting the sintered material to a microwave treatment or a heat treatment for a long period of time in an ammonia atmosphere or a pressurized nitrogen atmosphere. Dislocation density can be further reduced by combining synthesizing the cBN powder at high temperature or for a long period of time with exposing to an electron beam or subjecting to a microwave treatment or a heat treatment for a long period of time in an ammonia atmosphere or a pressurized nitrogen atmosphere.

EXAMPLES

The present embodiment will be described more specifically with reference to examples. Note, however, the present embodiment is not limited to these examples.

(Sample 1)

Initially, cubic boron nitride powder was prepared through the following procedure:
100 parts by mass of hexagonal boron nitride powder was blended with 10 parts by mass of LiCaBN$_2$ serving as a catalyst, and the mixture was maintained at 5 GPa and 1450°C for 30 minutes to obtain cubic boron nitride powder (cBN powder).

The cBN powder was irradiated with an electron beam. This was done with irradiation energy of 25 eV for an irradiation time of 10 hours.

Subsequently, a raw material powder for a binder was prepared through the following procedure.

TiN powder and Al powder were mixed at a ratio in mass of 85:15, heat-treated in a vacuum at 1200°C for 30 minutes, and thereafter agitated and pulverized in a wet ball mill to obtain a raw material powder for a binder.

The cBN powder after electron beam irradiation and the raw material powder for the binder were mixed and uniformly agitated in a wet ball mill method using ethanol to obtain a powdery mixture. Subsequently, the powdery mixture was degassed in a vacuum at 900°C to remove impurities such as moisture on the surface thereof. Note that in preparing the powdery mixture, the cBN powder and the raw material powder for the binder were mixed together at a ratio allowing the cubic boron nitride sintered material to include cBN grains at a ratio of 70% by volume as measured through an image analysis.

Subsequently, the powdery mixture was brought into contact with a WC-6% Co cemented carbide disc and a Co (cobalt) foil and thus introduced into a container made of Ta (tantalum), and the container was vacuumed and sealed. The powdery mixture in the vacuumed and sealed container was sintered using a belt-type ultrahigh-pressure and ultrahigh-temperature generator to increase pressure to 7 GPa at a rate of 0.4 GPa/min, and held at 7 GPa and 1700°C for 20 minutes and thus sintered to provide a cBN sintered material for sample 1.

(Samples 2 to 6, and 35)

A cBN sintered material was produced in the same manner as in Sample 1 except that cBN powder was irradiated with an electron beam under conditions changed as indicated in table 1-1 and table 2 at the "electron beam irradiation" column at the "energy (MeV)" and "time" subcolumns.

(Samples 7 to 12, and 38)

A cBN sintered material was produced in the same manner as in Sample 5 except that in producing the cBN powder, a holding time at 5 GPa and 1450°C was changed to those indicated in table 1-1 and table 2 at the "synthesis of cBN powder" column at the "catalyst & holding time" subcolumn.

(Sample 13)

A cBN sintered material was produced in the same manner as in Sample 5 except that in producing the cBN powder, $LiBN_2$ was used as a catalyst and a holding time at 5 GPa and 1450°C was changed to that indicated in table 1 at the "synthesis of cBN powder" column at the "catalyst & holding time" subcolumn.

(Sample 14)

A cBN sintered material was produced in the same manner as in Sample 5 except that the raw material powder for the binder was changed. The raw material powder for the binder was prepared through the following procedure.

ZrN powder and Al powder were mixed at a ratio in mass of 85:15, heat-treated in a vacuum at 1200°C for 30 minutes, and thereafter agitated and pulverized in a wet ball mill to obtain a raw material powder for a binder.

(Sample 15)

A cBN sintered material was produced in the same manner as in Sample 5 except that the raw material powder for the binder was changed. The raw material powder for the binder was prepared through the following procedure.

HfN powder and Al powder were mixed at a ratio in mass of 85:15, heat-treated in a vacuum at 1200°C for 30 minutes, and thereafter agitated and pulverized in a wet ball mill to obtain a raw material powder for a binder.

(Sample 16)

A cBN sintered material was produced in the same manner as in Sample 5 except that the raw material powder for the binder was changed. The raw material powder for the binder was prepared through the following procedure.

VN powder and Al powder were mixed at a ratio in mass of 85:15, heat-treated in a vacuum at 1200°C for 30 minutes, and thereafter agitated and pulverized in a wet ball mill to obtain a raw material powder for a binder.

(Sample 17)

A cBN sintered material was produced in the same manner as in Sample 5 except that the raw material powder for the binder was changed. The raw material powder for the binder was prepared through the following procedure.

NbN powder and Al powder were mixed at a ratio in mass of 85:15, heat-treated in a vacuum at 1200°C for 30 minutes, and thereafter agitated and pulverized in a wet ball mill to obtain a raw material powder for a binder.

(Sample 18)

A cBN sintered material was produced in the same manner as in Sample 5 except that the raw material powder for the binder was changed. The raw material powder for the binder was prepared through the following procedure.

TaN powder and Al powder were mixed at a ratio in mass of 85:15, heat-treated in a vacuum at 1200°C for 30 minutes, and thereafter agitated and pulverized in a wet ball mill to obtain a raw material powder for a binder.

(Sample 19)

A cBN sintered material was produced in the same manner as in Sample 5 except that the raw material powder for the binder was changed. The raw material powder for the binder was prepared through the following procedure.

$Cr_2N$ powder and Al powder were mixed at a ratio in mass of 85:15, heat-treated in a vacuum at 1200°C for 30 minutes, and thereafter agitated and pulverized in a wet ball mill to obtain a raw material powder for a binder.

(Sample 20)

A cBN sintered material was produced in the same manner as in Sample 5 except that the raw material powder for the binder was changed. The raw material powder for the binder was prepared through the following procedure.

$Mo_2N$ powder and Al powder were mixed at a ratio in mass of 85:15, heat-treated in a vacuum at 1200°C for 30 minutes, and thereafter agitated and pulverized in a wet ball mill to obtain a raw material powder for a binder.

(Sample 21)

A cBN sintered material was produced in the same manner as in Sample 5 except that the raw material powder for the binder was changed. The raw material powder for the binder was prepared through the following procedure.

$W_2N$ powder and Al powder were mixed at a ratio in mass of 85:15, heat-treated in a vacuum at 1200°C for 30 minutes, and thereafter agitated and pulverized in a wet ball mill to obtain a raw material powder for a binder.

(Sample 22)

A cBN sintered material was produced in the same manner as in Sample 5 except that the raw material powder for the binder was changed. The raw material powder for the binder was prepared through the following procedure.

TiN powder, Cr powder, Ni powder, and Co powder were mixed at a ratio in mass of 85:5:5:5, heat-treated in a vacuum at 1200°C for 30 minutes, and thereafter agitated and pulverized in a wet ball mill to obtain a raw material powder for a binder.

(Sample 23)

A cBN sintered material was produced in the same manner as in Sample 5 except that the raw material powder for the binder was changed. The raw material powder for the binder was prepared through the following procedure.

TiN powder and Si powder were mixed at a ratio in mass of 85:15, heat-treated in a vacuum at 1200°C for 30 minutes, and thereafter agitated and pulverized in a wet ball mill to obtain a raw material powder for a binder.

(Sample 24)

A cBN sintered material was produced in the same manner as in Sample 5 except that the raw material powder for the binder was changed. The raw material powder for the binder was prepared through the following procedure.

TiCN powder and Al powder were mixed at a ratio in mass of 85:15, heat-treated in a vacuum at 1200°C for 30 minutes, and thereafter agitated and pulverized in a wet ball mill to obtain a raw material powder for a binder.

(Sample 25)

A cBN sintered material was produced in the same manner as in Sample 5 except that the raw material powder for the binder was changed. The raw material powder for the binder was prepared through the following procedure.

$TiO_2$ powder, $Nb_2O_5$ powder, and carbon (C) powder were mixed at a ratio in weight of 57.19:16.79:26.02 and heat-treated at 2100°C for 60 minutes in a nitrogen atmosphere to synthesize a single-phase compound having a composition of TiNbCN. The single-phase compound was pulverized in a wet pulverization method to have a particle diameter of 0.5 $\mu$m to obtain TiNbCN powder.

TiNbCN powder and Al powder were mixed at a ratio in mass of 85:15, heat-treated in a vacuum at 1200°C for 30 minutes, and thereafter agitated and pulverized in a wet ball mill to obtain a raw material powder for a binder.

(Sample 26)

A cBN sintered material was produced in the same manner as in Sample 5 except that the raw material powder for the binder was changed. The raw material powder for the binder was prepared through the following procedure.

$TiO_2$ powder, $ZrO_2$ powder, and carbon (C) powder were mixed at a ratio in weight of 58.35:15.88:25.77 and heat-treated at 2100°C for 60 minutes in a nitrogen atmosphere to synthesize a single-phase compound having a composition of TiZrCN. The single-phase compound was pulverized in a wet pulverization method to have a particle diameter of 0.5 $\mu$m to obtain TiZrCN powder.

TiZrCN powder and Al powder were mixed at a ratio in mass of 85:15, heat-treated in a vacuum at 1200°C for 30 minutes, and thereafter agitated and pulverized in a wet ball mill to obtain a raw material powder for a binder.

(Sample 27)

A cBN sintered material was produced in the same manner as in Sample 5 except that the raw material powder for the binder was changed. The raw material powder for the binder was prepared through the following procedure.

$TiO_2$ powder, $HfO_2$ powder, and carbon (C) powder were mixed at a ratio in weight of 52.45:24.38:23.17 and heat-treated at 2100°C for 60 minutes in a nitrogen atmosphere to synthesize a single-phase compound having a composition of TiHfCN. The single-phase compound was pulverized in a wet pulverization method to have a particle diameter of 0.5 $\mu$m to obtain TiHfCN powder.

TiHfCN powder and Al powder were mixed at a ratio in mass of 85:15, heat-treated in a vacuum at 1200°C for 30 minutes, and thereafter agitated and pulverized in a wet ball mill to obtain a raw material powder for a binder.

(Sample 28)

A cBN sintered material was produced in the same manner as in Sample 5 except that the raw material powder for the binder was changed. The raw material powder for the binder was prepared through the following procedure.

$TiO_2$ powder, $Ta_2O_5$ powder, and carbon (C) powder were mixed at a ratio in weight of 51.467:25.116:23.417 and heat-treated at 2100°C for 60 minutes in a nitrogen atmosphere to synthesize a single-phase compound having a composition of TiTaCN. The single-phase compound was pulverized in a wet pulverization method to have a particle diameter of 0.5 $\mu$m to obtain TiTaCN powder.

TiTaCN powder and Al powder were mixed at a ratio in mass of 85:15, heat-treated in a vacuum at 1200°C for 30 minutes, and thereafter agitated and pulverized in a wet ball mill to obtain a raw material powder for a binder.

(Sample 29)

A cBN sintered material was produced in the same manner as in Sample 5 except that the raw material powder for the binder was changed. The raw material powder for the binder was prepared through the following procedure.

$TiO_2$ powder, $Cr_2O_3$ powder (produced by Kojundo Chemical Lab. Co., Ltd.), and carbon (C) powder were mixed at a ratio in weight of 62.64:10.52 :26.84 and heat-treated at 2100°C for 60 minutes in a nitrogen atmosphere to synthesize a single-phase compound having a composition of TiCrCN. The single-phase compound was pulverized in a wet pulverization method to have a particle diameter of 0.5 $\mu$m to obtain TiCrCN powder.

TiCrCN powder and Al powder were mixed at a ratio in mass of 85:15, heat-treated in a vacuum at 1200°C for 30 minutes, and thereafter agitated and pulverized in a wet ball mill to obtain a raw material powder for a binder.

(Samples 30 to 33, 36, and 37)

A cBN sintered material was produced in the same manner as in Sample 5 except that in producing the powdery mixture the cBN powder and the raw material powder for the binder were mixed together at a ratio allowing the cubic boron nitride sintered material to include cBN grains at a ratio in volume indicated in table 1-2 and table 2 at the "cBN sintered material" column at the "cBN grains" subcolumn.

(Sample 34)

A cBN sintered material was produced in the same manner as in Sample 1 except that the cBN powder was not irradiated with an electron beam.

(Sample 39)

A cBN sintered material was produced in the same manner as in Sample 5 except that after the cBN powder was synthesized it was not irradiated with an electron beam and instead subjected to a heat treatment in an ammonia atmosphere at 500°C for 12 hours.

(Sample 40)

A cBN sintered material was produced in the same manner as in Sample 5 except that after the cBN powder was synthesized it was not irradiated with an electron beam and instead subjected to a heat treatment in a pressurized nitrogen atmosphere of 300 kPa at 900°C for 12 hours.

(Sample 41)

A cBN sintered material was produced in the same manner as in Sample 5 except that in sintering the powdery mixture, a rate of 3.0 GPa/min was applied to increase pressure to 7 GPa, and 7 GPa and 1700°C were held for 60 minutes to sinter the powdery mixture.

(Sample 42)

A cBN sintered material was produced in the same manner as in Sample 5 except that the cBN powder was synthesized at 7 GPa and 1750°C for 60 minutes.

<Evaluation>

(Composition of cBN sintered material)

The volumetric ratio between the cBN grains and the binder phase in the cBN sintered material was measured. How it was specifically measured will not be described as it is identical to a method described inDETAILED DESCRIPTION, as has been described above. It has been confirmed that for each sample, a ratio in volume of cBN grains to a cBN sintered material is a ratio in volume indicated in table 1-1, table 1-2 and table 2 at the "cBN sintered material" column at the "cBN grains (vol %)" subcolumn, and a ratio in volume of a binder phase to the cBN sintered material is as indicated in table 1-1, table 1-2 and table 2 at the "cBN sintered material" column at the "binder phase (vol %)" subcolumn.

(Composition of binder phase)

The composition of the binder phase in the cBN sintered material was determined through XRD. A result is shown in table 1-1, table 1-2 and table 2 at the "binder phase" column at the "composition" subcolumn.

(Dislocation Density)

The dislocation density of the cBN grains in the cBN sintered material was measured. How it was specifically measured will not be described as it is identical to that described in DETAILED DESCRIPTION, as has been described above. A result is indicated in table 1-1, table 1-2 and table 2 at the "dislocation density" column.

(Calcium Content)

The calcium content of the cBN grains in the cBN sintered material was measured through an ICP analysis. How it was specifically measured will not be described as it is identical to that described in DETAILED DESCRIPTION, as has been described above. A result is indicated in table 1-1, table 1-2 and table 2 at the "cBN grain's Ca content" column.

(Cutting Test)

The cBN sintered material of each sample produced was used to produce a cutting tool (substrate's shape: CNGA120408, cutting-edge processing: T01215). Using this, a cutting test was performed under cutting conditions indicated below.

The following cutting conditions correspond to high-speed processing of hardened steel.

Cutting speed: 250 m/min
Feed rate: 0.1 mm/rev
Cutting depth: 0.2 mm
Coolant: (Dry)
Cutting method: intermittent cutting
Lathe: LB400 (manufactured by Okuma Corporation)
Workpiece: SCM 415, HRC 58-62, of $\varphi$ of 100 mm × L of 300 mm having six longitudinal V-shaped grooves.

Evaluation Method: The cutting edge was observed every 1 km, and flank wear was measured. A cut distance when a maximum flank wear reached 200 $\mu$m or more was measured, and determined as a cutting tool's lifetime. A result thereof is indicated in table 1-1, table 1-2 and table 2 at the "tool life" column.

Table 1-1

| sample nos. | electron beam irradiation irradiation energy (MeV) | electron beam irradiation (time) | synthesis of cBN powder catalyst & holding time | cBN powder heat treatment temperature, time & atmosphere | sintering conditions pressure increasing rate & holding time | cBN grains (vol%) | cBN sintered material binder phase (vol%) | cBN sintered material binder phase composition | cBN sintered material dislocation density (/m²) | cBN sintered material cBN grain's Ca content (mass %) | cutting test tool life (km) |
|---|---|---|---|---|---|---|---|---|---|---|---|
| 1 | 25 | 10 | LiCaBN$_2$, 30min | none | 0.4GPa/min,20min | 70 | 30 | TiN, TiB$_2$, AlN, Al$_2$O$_3$ | $1.00\times10^{17}$ | 0.1 | 6.1 |
| 2 | 30 | 24 | LiCaBN$_2$, 30min | none | 0.4GPa/min,20min | 70 | 30 | TiN, TiB$_2$, AlN, Al$_2$O$_3$ | $1.00\times10^{15}$ | 0.1 | 6.3 |
| 3 | 25 | 15 | LiCaBN$_2$, 30min | none | 0.4GPa/min,20min | 70 | 30 | TiN, TiB$_2$, AlN, Al$_2$O$_3$ | $9.60\times10^{15}$ | 0.1 | 7.6 |
| 4 | 30 | 15 | LiCaBN$_2$, 30min | none | 0.4GPa/min,20min | 70 | 30 | TiN, TiB$_2$, AlN, Al$_2$O$_3$ | $5.50\times10^{15}$ | 0.1 | 7.1 |
| 5 | 25 | 24 | LiCaBN$_2$, 30min | none | 0.4GPa/min,20min | 70 | 30 | TiN, TiB$_2$, AlN, Al$_2$O$_3$ | $8.00\times10^{15}$ | 0.1 | 8.1 |
| 6 | 30 | 10 | LiCaBN$_2$, 30min | none | 0.4GPa/min,20min | 70 | 30 | TiN, TiB$_2$, AlN, Al$_2$O$_3$ | $3.00\times10^{15}$ | 0.1 | 7.5 |
| 7 | 25 | 24 | LiCaBN$_2$, 60min | none | 0.4GPa/min,20min | 70 | 30 | TiN, TiB$_2$, AlN, Al$_2$O$_3$ | $8.00\times10^{15}$ | 0.2 | 5.3 |
| 8 | 25 | 24 | LiCaBN$_2$, 5min | none | 0.4GPa/min,20min | 70 | 30 | TiN, TiB$_2$, AlN, Al$_2$O$_3$ | $8.00\times10^{15}$ | 0.02 | 8.5 |
| 9 | 25 | 24 | LiCaBN$_2$, 50min | none | 0.4GPa/min,20min | 70 | 30 | TiN, TiB$_2$, AlN, Al$_2$O$_3$ | $8.00\times10^{15}$ | 0.17 | 7.6 |
| 10 | 25 | 24 | LiCaBN$_2$, 10min | none | 0.4GPa/min,20min | 70 | 30 | TiN, TiB$_2$, AlN, Al$_2$O$_3$ | $8.00\times10^{15}$ | 0.05 | 8.3 |
| 11 | 25 | 24 | LiCaBN$_2$, 40min | none | 0.4GPa/min,20min | 70 | 30 | TiN, TiB$_2$, AlN, Al$_2$O$_3$ | $8.00\times10^{15}$ | 0.15 | 7.9 |
| 12 | 25 | 24 | LiCaBN$_2$, 20min | none | 0.4GPa/min,20min | 70 | 30 | TiN, TiB$_2$, AlN, Al$_2$O$_3$ | $8.00\times10^{15}$ | 0.07 | 8.5 |

(continued)

| sample nos. | electron beam irradiation | | synthesis of cBN powder | cBN powder heat treatment | sintering conditions | cBN sintered material | | | | | | cutting test |
|---|---|---|---|---|---|---|---|---|---|---|---|---|
| | irradiation energy (MeV) | (time) | catalyst & holding time | temperature, time & atmosphere | pressure increasing rate & holding time | cBN grains (vol%) | binder phase (vol%) | binder phase composition | dislocation density (/m$^2$) | cBN grain's Ca content (mass %) | | tool life (km) |
| 13 | 25 | 24 | LiBN$_2$, 30min | none | 0.4GPa/min,20min | 70 | 30 | TiN, TiB$_2$, AlN, Al$_2$O$_3$ | $8.00 \times 10^{15}$ | < 0.001 | | 8.8 |
| 14 | 25 | 24 | LiCaBN$_2$, 30min | none | 0.4GPa/min,20min | 70 | 30 | ZrN, ZrB$_2$, AlN, Al$_2$O$_3$ | $8.00 \times 10^{15}$ | 0.1 | | 6.1 |
| 15 | 25 | 24 | LiCaBN$_2$, 30min | none | 0.4GPa/min,20min | 70 | 30 | HfN, AlN, Al$_2$O$_3$ | $8.00 \times 10^{15}$ | 0.1 | | 7.2 |
| 16 | 25 | 24 | LiCaBN$_2$, 30min | none | 0.4GPa/min,20min | 70 | 30 | VN, AlN, Al$_2$O$_3$ | $8.00 \times 10^{15}$ | 0.1 | | 6.3 |
| 17 | 25 | 24 | LiCaBN$_2$, 30min | none | 0.4GPa/min,20min | 70 | 30 | NbN, AlN, Al$_2$O$_3$ | $8.00 \times 10^{15}$ | 0.1 | | 6.7 |
| 18 | 25 | 24 | LiCaBN$_2$, 30min | none | 0.4GPa/min,20min | 70 | 30 | TaN, AlN, Al$_2$O$_3$ | $8.00 \times 10^{15}$ | 0.1 | | 6.4 |
| 19 | 25 | 24 | LiCaBN$_2$, 30min | none | 0.4GPa/min,20min | 70 | 30 | Cr$_2$N, AlN, Al$_2$O$_3$ | $8.00 \times 10^{15}$ | 0.1 | | 5.7 |

Table 1-2

| sample nos. | electron beam irradiation | | synthesis of cBN powder | cBN powder heat treatment | sintering conditions | cBN sintered material | | | | | cutting test |
|---|---|---|---|---|---|---|---|---|---|---|---|
| | irradiation energy (MeV) | (time) | catalyst & holding time | temperature, time & atmosphere | pressure increasing rate & holding time | cBN grains (vol%) | binder phase | | dislocation density | cBN grain's Ca content | tool life |
| | | | | | | | (vol%) | composition | $(/m^2)$ | (mass %) | (km) |
| 20 | 25 | 24 | LiCaBN$_2$, 30min | none | 0.4GPa/min, 20min | 70 | 30 | Mo$_2$N, AlN, Al$_2$O$_3$ | $8.00\times10^{15}$ | 0.1 | 5.5 |
| 21 | 25 | 24 | LiCaBN$_2$, 30min | none | 0.4GPa/min, 20min | 70 | 30 | W$_2$N, AlN, Al$_2$O$_3$ | $8.00\times10^{15}$ | 0.1 | 5.6 |
| 22 | 25 | 24 | LiCaBN$_2$, 30min | none | 0.4GPa/min, 20min | 70 | 30 | TiN, Ni, Co, Cr | $8.00\times10^{15}$ | 0.1 | 5.8 |
| 23 | 25 | 24 | LiCaBN$_2$, 30min | none | 0.4GPa/min, 20min | 70 | 30 | TiN, Si$_3$N$_4$, SiO$_2$ | $8.00\times10^{15}$ | 0.1 | 5.4 |
| 24 | 25 | 24 | LiCaBN$_2$, 30min | none | 0.4GPa/min, 20min | 70 | 30 | TiCN, TiB$_2$, AlN, Al$_2$O$_3$ | $8.00\times10^{15}$ | 0.1 | 8.3 |
| 25 | 25 | 24 | LiCaBN$_2$, 30min | none | 0.4GPa/min, 20min | 70 | 30 | TiNbCN, TiB$_2$, AlN, Al$_2$O$_3$ | $8.00\times10^{15}$ | 0.1 | 8.8 |
| 26 | 25 | 24 | LiCaBN$_2$, 30min | none | 0.4GPa/min, 20min | 70 | 30 | TiZrCN, TiB$_2$, AlN, Al$_2$O$_3$ | $8.00\times10^{15}$ | 0.1 | 8.1 |
| 27 | 25 | 24 | LiCaBN$_2$, 30min | none | 0.4GPa/min, 20min | 70 | 30 | TiHfCN, TiB$_2$, AlN, Al$_2$O$_3$ | $8.00\times10^{15}$ | 0.1 | 8.3 |
| 28 | 25 | 24 | LiCaBN$_2$, 30min | none | 0.4GPa/min, 20min | 70 | 30 | TiTaCN, TiB$_2$, AlN, Al$_2$O$_3$ | $8.00\times10^{15}$ | 0.1 | 8.5 |
| 29 | 25 | 24 | LiCaBN$_2$, 30min | none | 0.4GPa/min, 20min | 70 | 30 | TiCrCN, TiB$_2$, AlN, Al$_2$O$_3$ | $8.00\times10^{15}$ | 0.1 | 8.0 |

| sample nos. | electron beam irradiation | | synthesis of cBN powder | cBN powder heat treatment | sintering conditions | cBN sintered material | | | | | cutting test |
| | irradiation energy (MeV) | (time) | catalyst & holding time | temperature, time & atmosphere | pressure increasing rate & holding time | cBN grains (vol%) | binder phase | | dislocation density | cBN grain's Ca content | tool life |
| | | | | | | | (vol%) | composition | $(/m^2)$ | (mass %) | (km) |
| 30 | 25 | 24 | LiCaBN$_2$, 30min | none | 0.4GPa/min, 20min | 80 | 20 | TiN, TiB$_2$, AlN, Al$_2$O$_3$ | $8.00 \times 10^{15}$ | 0.1 | 7.9 |
| 31 | 25 | 24 | LiCaBN$_2$, 30min | none | 0.4GPa/min, 20min | 30 | 70 | TiN, TiB$_2$, AlN, Al$_2$O$_3$ | $8.00 \times 10^{15}$ | 0.1 | 5.9 |
| 32 | 25 | 24 | LiCaBN$_2$, 30min | none | 0.4GPa/min, 20min | 40 | 60 | TiN, TiB$_2$, AlN, Al$_2$O$_3$ | $8.00 \times 10^{15}$ | 0.1 | 6.1 |

[Table 2]

| sample nos. | electron beam irradiation | | synthesis of cBN powder | cBN powder heat treatment | sintering conditions | cBN sintered material | | | | | cutting test |
| --- | --- | --- | --- | --- | --- | --- | --- | --- | --- | --- | --- |
| | irradiation energy (MeV) | (time) | catalyst & holding time | temperature, time & atmosphere | pressure increasing rate & holding time | cBN grains (vol%) | binder phase | | dislocation density | cBN grain's Ca content | tool life |
| | | | | | | | (vol%) | composition | (/m$^2$) | (mass %) | (km) |
| 33 | 25 | 24 | LiCaBN$_2$, 30min | none | 0.4GPa/min, 20min | 75 | 25 | TiN, TiB$_2$, AIN, Al$_2$O$_3$ | $8.00 \times 10^{15}$ | 0.1 | 7.9 |
| 34 | - | - | LiCaBN$_2$, 30min | none | 0.4GPa/min, 20min | 70 | 30 | TiN, TiB$_2$, AIN, Al$_2$O$_3$ | $1.20 \times 10^{17}$ | 0.1 | 4.6 |
| 35 | 30 | 35 | LiCaBN$_2$, 30min | none | 0.4GPa/min, 20min | 70 | 30 | TiN, TiB$_2$, AIN, Al$_2$O$_3$ | $8.00 \times 10^{14}$ | 0.1 | 4.5 |
| 36 | 25 | 24 | LiCaBN$_2$, 30min | none | 0.4GPa/min, 20min | 28 | 72 | TiN, TiB$_2$, AIN, Al$_2$O$_3$ | $8.00 \times 10^{15}$ | 0.1 | 3.0 |
| 37 | 25 | 24 | LiCaBN$_2$, 30min | none | 0.4GPa/min, 20min | 82 | 18 | TiN, TiB$_2$, AIN, Al$_2$O$_3$ | $8.00 \times 10^{15}$ | 0.1 | 2.2 |
| 38 | 25 | 24 | LiCaBN$_2$, 80min | none | 0.4GPa/min, 20min | 70 | 30 | TiN, TiB$_2$, AIN, Al$_2$O$_3$ | $8.00 \times 10^{15}$ | 0.22 | 5.1 |
| 39 | - | - | LiCaBN$_2$, 30min | 500°C,12h, NH$_3$ | 0.4GPa/min, 20min | 70 | 30 | TiN, TiB$_2$, AIN, Al$_2$O$_3$ | $9.80 \times 10^{15}$ | 0.1 | 7.3 |
| 40 | - | - | LiCaBN$_2$, 30min | 900°C, 12h, N$_2$, 300kPa | 0.4GPa/min, 20min | 70 | 30 | TiN, TiB$_2$, AIN, Al$_2$O$_3$ | $9.70 \times 10^{15}$ | 0.1 | 7.5 |
| 41 | 25 | 24 | LiCaBN$_2$, 30min | none | 3.0GPa/min, 60min | 70 | 30 | TiN, TiB$_2$, AIN, Al$_2$O$_3$ | $9.40 \times 10^{15}$ | 0.1 | 7.7 |
| 42 | 25 | 24 | LiCaBN$_2$, 60min (7GPa, 1750°C) | none | 0.4GPa/min, 20min | 70 | 30 | TiN, TiB$_2$, AIN, Al$_2$O$_3$ | $9.30 \times 10^{15}$ | 0.1 | 7.9 |

<Discussion>

The cBN sintered materials of Samples 1 to 33 and 38 to 42 correspond to examples.

The cBN sintered material of sample 34 includes cBN grains having a dislocation density exceeding $1 \times 10^{17}/m^2$ and corresponds to a comparative example.

The cBN sintered material of sample 35 includes cBN grains having a dislocation density of less than $1 \times 10^{15}/m^2$ and corresponds to a comparative example.

The cBN sintered material of sample 36 includes cBN grains at a ratio in volume of less than 30% by volume and corresponds to a comparative example.

The cBN sintered material of sample 37 includes cBN grains at a ratio in volume exceeding 80% by volume and corresponds to a comparative example.

It has been confirmed that samples 1 to 33 and samples 38 to 42 corresponding to examples provide a longer tool life in high speed processing of hardened steel than samples 34 to 37 corresponding to comparative examples. This is presumably because samples 1 to 33 and 38 to 42 corresponding to examples are resistant to crater wear and thus provide a tool with enhanced wear resistance.

While embodiments and examples of the present disclosure have been described as above, it is also planned from the beginning that the configurations of the above-described embodiments and examples are appropriately combined and variously modified.

The embodiments and examples disclosed herein are illustrative in all respects and should not be construed as being restrictive. The scope of the present invention is shown not by the above-described embodiments and examples but by the claims, and is intended to include all modifications within the scope and meaning equivalent to the claims.

**Claims**

1. A cubic boron nitride sintered material comprising 30% by volume or more and 80% by volume or less of cubic boron nitride grains and 20% by volume or more and 70% by volume or less of a binder phase,

   the binder phase including:

   - at least one selected from the group consisting of: a simple substance selected from the group consisting of a group 4 element, a group 5 element and a group 6 element of the periodic table, aluminum, silicon, cobalt and nickel; an alloy thereof; and an intermetallic compound thereof;
   - at least one selected from the group consisting of: a compound consisting of at least one element selected from the group consisting of a group 4 element, a group 5 element and a group 6 element of the periodic table, aluminum, silicon, cobalt and nickel, and at least one element selected from the group consisting of nitrogen, carbon, boron and oxygen; and a solid solution derived from the compound; or
   - at least one selected from the group consisting of a simple substance selected from the group consisting of a group 4 element, a group 5 element and a group 6 element of the periodic table, aluminum, silicon, cobalt and nickel, an alloy thereof, and an intermetallic compound thereof; and at least one selected from the group consisting of a compound consisting of at least one element selected from the group consisting of a group 4 element, a group 5 element and a group 6 element of the periodic table, aluminum, silicon, cobalt and nickel and at least one element selected from the group consisting of nitrogen, carbon, boron and oxygen, and a solid solution derived from the compound,

   the cubic boron nitride grains having a dislocation density of $1 \times 10^{15}/m^2$ or more and $1 \times 10^{17}/m^2$ or less.

2. The cubic boron nitride sintered material according to claim 1, wherein the cubic boron nitride grains have a dislocation density of $1 \times 10^{15}/m^2$ or more and $5 \times 10^{16}/m^2$ or less.

3. The cubic boron nitride sintered material according to claim 1 or 2, wherein the cubic boron nitride grains include 0.2% by mass or less of calcium.

4. The cubic boron nitride sintered material according to claim 3, wherein the cubic boron nitride grains include 0.17% by mass or less of calcium.

5. The cubic boron nitride sintered material according to claim 4, wherein the cubic boron nitride grains include 0.15% by mass or less of calcium.

6. The cubic boron nitride sintered material according to any one of claims 1 to 5, comprising 40% by volume or more and 75% by volume or less of the cubic boron nitride grains.

**INTERNATIONAL SEARCH REPORT**

| International application No. |
|---|
| PCT/JP2019/049194 |

A. CLASSIFICATION OF SUBJECT MATTER
Int.Cl. C04B35/5831(2006.01)i, C04B35/5835(2006.01)i
FI: C04B35/5831, C04B35/5835

According to International Patent Classification (IPC) or to both national classification and IPC

B. FIELDS SEARCHED

Minimum documentation searched (classification system followed by classification symbols)
Int.Cl. C04B35/5831, C04B35/5835

Documentation searched other than minimum documentation to the extent that such documents are included in the fields searched
    Published examined utility model applications of Japan    1922–1996
    Published unexamined utility model applications of Japan    1971–2020
    Registered utility model specifications of Japan    1996–2020
    Published registered utility model applications of Japan    1994–2020

Electronic data base consulted during the international search (name of data base and, where practicable, search terms used)
    JSTPlus/JSTChina/JST7580(JDreamIII)

C. DOCUMENTS CONSIDERED TO BE RELEVANT

| Category* | Citation of document, with indication, where appropriate, of the relevant passages | Relevant to claim No. |
|---|---|---|
| A | JP 2006-347850 A (SUMITOMO ELECTRIC INDUSTRIES, LTD.) 28.12.2006 (2006-12-28), entire text | 1-6 |
| A | WO 2007/145071 A1 (SUMITOMO ELECTRIC HARDMETAL CORP.) 21.12.2007 (2007-12-21), entire text | 1-6 |
| A | JP 2018-505839 A (DIAMOND INNOVATIONS, INC.) 01.03.2018 (2018-03-01), entire text | 1-6 |
| A | JP 2019-515864 A (ILJIN DIAMOND CO., LTD.) 13.06.2019 (2019-06-13), entire text | 1-6 |
| A | WO 2007/039955 A1 (SUMITOMO ELECTRIC HARDMETAL CORP.) 12.04.2007 (2007-04-12), entire text | 1-6 |

☒ Further documents are listed in the continuation of Box C.      ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 30.01.2020 | 25.02.2020 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2019/049194

C (Continuation).    DOCUMENTS CONSIDERED TO BE RELEVANT

| Category* | Citation of document, with indication, where appropriate, of the relevant passages | Relevant to claim No. |
|---|---|---|
| A | CN 109534826 A (UNIV SOUTHERN SCI & TECH) 29.03.2019 (2019-03-29), entire text | 1-6 |
| A | JP 2005-187260 A (SUMITOMO ELECTRIC HARDMETAL CORP.) 14.07.2005 (2005-07-14), entire text | 1-6 |
| A | WO 2004/103615 A1 (JAPAN SCIENCE AND TECHNOLOGY AGENCY) 02.12.2004 (2004-12-02), entire text | 1-6 |

Form PCT/ISA/210 (second sheet) (January 2015)

**INTERNATIONAL SEARCH REPORT**
Information on patent family members

International application No.

PCT/JP2019/049194

```
JP 2006-347850 A   28.12.2006   (Family: none)

WO 2007/145071 A1  21.12.2007   US 2015/0328691 A1
                                whole document
                                CN 101466651 A
                                KR 10-2009-0024712 A
                                EP 2039667 A1

JP 2018-505839 A   01.03.2018   US 2017/0369314 A1
                                whole document
                                CN 107207365 A
                                KR 10-2017-0100600 A
                                WO 2016/109775 A1
                                EP 3245176 A1

JP 2019-515864 A   13.06.2019   US 2019/0071360 A1
                                whole document
                                DE 112017001964 T
                                KR 10-2017-0116468 A
                                WO 2017/179828 A1

WO 2007/039955 A1  12.04.2007   US 2008/0254282 A1
                                whole document
                                CN 101068759 A
                                EP 1932816 A1
                                KR 10-1172925 B1
                                CA 2577615 A1

CN 109534826 A     29.03.2019   (Family: none)

JP 2005-187260 A   14.07.2005   US 2005/0143252 A1
                                whole document
                                EP 1547990 A2
                                KR 10-2005-0065402 A
                                CN 1636935 A
                                ES 2352435 T
                                CA 2487372 A1

WO 2004/103615 A1  02.12.2004   US 2006/0213127 A1
                                whole document
                                EP 1637258 A1
                                KR 10-2006-0033718 A
                                CN 1795070 A
                                TW 200505636 A
```

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000044350 A

**Non-patent literature cited in the description**

- **T. UNGAR ; A. BORBELY.** The effect of dislocation contrast on x-ray line broadening: A new approach to line profile analysis. *Appl. Phys. Lett.,* 1996, vol. 69 (21), 3173

- **T. UNGAR ; S. OTT ; P. SANDERS ; A. BORBELY ; J. WEERTMAN.** Dislocations, grain size and planar faults in nanostructured copper determined by high resolution X-ray diffraction and a new procedure of peak profile analysis. *Acta Mater.,* 1998, vol. 46 (10), 3693-3699